# EUROPÄISCHE PATENTSCHRIFT

(11) **EP 2 998 167 B1**
(45) Veröffentlichungstag und Bekanntmachung des Hinweises auf die Patenterteilung: **29.03.2017**
(21) Anmeldenummer: 15182016.4
(22) Anmeldetag: 21.08.2015
(51) Int. Cl.: B60R 16/03, A01D 69/02

(54) **ENERGIESPEICHERMODUL FÜR EIN LANDWIRTSCHAFTLICHES FAHRZEUG**
ENERGY STORAGE MODULE FOR AN AGRICULTURAL VEHICLE
MODULE DE STOCKAGE D'ENERGIE POUR UN VEHICULE AGRICOLE

(30) Priorität: 22.09.2014 DE 102014113613
(43) Veröffentlichungstag der Anmeldung: 23.03.2016
(73) Patentinhaber: CLAAS Tractor S.A.S., 78141 Vélizy-Villacoublay Cedex (FR)
(72) Erfinder: Momal, Pascal, 78140 Velízy Villacoublay (FR)
(74) Vertreter: Budach, Steffen

(56) Entgegenhaltungen:
- EP-A2- 1 997 686
- WO-A1-2013/009322
- WO-A2-2012/154990
- DE-A1-102009 024 373
- DE-A1-102009 037 775
- DE-A1-102012 213 240
- US-A1- 2003 150 156

## Beschreibung

Die Erfindung betrifft eine Energiespeichermodul für ein landwirtschaftliches Fahrzeug gemäß dem Oberbegriff des Anspruchs 1.

Moderne landwirtschaftliche Fahrzeuge, beispielsweise Traktoren, weisen eine zunehmende Elektrifizierung auf, wobei elektrische Verbraucher wie Sensoren und Aktoren über ein elektrisches Bordnetz mit Energie versorgt werden und über dieses gesteuert und geregelt werden können. Das Bordnetz weist zudem üblicherweise eine Batterie zum Speichern elektrischer Energie sowie einen mit einem Verbrennungsmotor des landwirtschaftlichen Fahrzeuges verbundenen Starter auf. Mittels des Starters kann der Verbrennungsmotor elektrisch gestartet werden und bei laufendem Verbrennungsmotor elektrische Energie zur Einspeisung in das Bordnetz generiert werden. Mit der Vielzahl an elektrischen Verbrauchern in dem landwirtschaftlichen Fahrzeug steigt nicht nur die benötigte elektrische Leistung, sondern auch der Bedarf zur Speicherung elektrischer Leistung in dem landwirtschaftlichen Fahrzeug. Der elektrische Speicherbedarf kann noch erhöht werden, wenn beispielsweise bei dem landwirtschaftlichen Fahrzeug in einem sogenannten Rekuperationsbetrieb kinetische Energie in Form von elektrischer Energie, beispielsweise bei einer Talfahrt des Fahrzeuges, gewonnen werden soll, um den Kraftstoffverbrauch weiter zu senken. Der in einem landwirtschaftlichen Fahrzeug zur Unterbringung insbesondere von elektrischen Speichern zur Verfügung stehende Bauraum ist jedoch sehr begrenzt, da bereits ein Vielzahl von zur Durchführung der originären Arbeiten benötigte Systeme untergebracht werden müssen.

Aus der DE 10 2012 213 240 A1 ist eine Anordnung von Elektronikkomponenten bei einer Arbeitsmaschine mit zumindest einer elektrischen Maschine und mit einem elektrischen Bordnetz bekannt, wobei zumindest eine zumindest eine Elektronikkomponente umfassende Elektronikbox vorgesehen ist, die über zumindest einen elektronikboxseitigen Anschluss mit zumindest einem korrespondierenden arbeitsmaschinenseitigen Anschluss lösbar verbunden ist. Mehrere Elektronikboxen sind dabei modular zusammenstellbar, so dass unterschiedliche Elektronikkomponenten, beispielsweise zur Steuerung einer landwirtschaftlichen Arbeitsmaschine, platzsparend und funktionell flexible zusammengestellt werden können. Nachteilig ist jedoch, dass zur Unterbringung von hinreichend großer elektrische Speicherkapazität nicht genügend Bauraum zur Verfügung gestellt werden kann.

Aus der EP 1 997 686 ist ein Energiespeichermodul mit einem Energiespeicher gemäß Oberbegriff des Anspruchs 1 bekannt.

Es ist daher die Aufgabe der vorliegenden Erfindung ein Energiespeichermodul für ein landwirtschaftliches Fahrzeug bereitzustellen, dass eine Vergrößerung der elektrischen Speicherkapazität des landwirtschaftlichen Fahrzeuges und im Hinblick auf den verfügbaren Bauraum eine platzsparende Anordnung an dem landwirtschaftlichen Fahrzeug ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Energiespeichermodul mit einem Energiespeicher zum abrufbaren Speichern elektrischer Energie für ein landwirtschaftliches Fahrzeug mit einem elektrischen Bordnetz, mindestens einem elektrischen Antriebselement und mindestens einer außenseitigen Anbauvorrichtung. Das Energiespeichermodul ist derart ausgebildet und ausgestaltet, dass es lösbar mit einer, insbesondere frontseitig und/oder heckseitig angeordneten, Anbauvorrichtung des landwirtschaftlichen Fahrzeuges und dessen Bordnetz zur Übertragung elektrischer Energie verbindbar ist. Durch die Anordnung des Energiespeichermoduls an einer außenseitigen Anbauvorrichtung, insbesondere frontseitig und/oder heckseitig, an dem landwirtschaftlichen Fahrzeug kann eine bereits vorhandene Anbauvorrichtung zur Befestigung des Energiespeichermoduls genutzt werden. Das Energiespeichermodul kann dabei beispielsweise mittels einer Steckverbindung mit dem Bordnetz des landwirtschaftlichen Fahrzeuges verbunden werden. Durch die außenseitige Anordnung kann eine Befestigung unabhängig von dem an dem landwirtschaftlichen Fahrzeug vorhandenen Bauraum erfolgen. Dies hat den Vorteil, dass die Größe eines Energiespeichers des Energiespeichermoduls und damit insbesondere die speicherbare Leistung, nicht durch einen fahrzeugspezifischen Bauraum beschränkt wird. Dies hat den Vorteil, dass ein hinreichend großer elektrischer Speicher einsetzbar ist, der einen energieeffizienteren, kraftstoffsparender Einsatz des landwirtschaftlichen Fahrzeuges ermöglicht. Zudem wird durch die Nutzung einer an dem landwirtschaftlichen Fahrzeug vorhandenen Anbauvorrichtung ein Nachrüsten und/oder Umrüsten des Energiespeichermoduls mit geringem Aufwand ermöglicht. Besonders vorteilhaft ist, dass das üblicherweise hohe Gewicht von Energiespeichern, beispielsweise von Batterien, zur Ballastierung des landwirtschaftlichen Fahrzeuges genutzt werden kann.

In einer bevorzugten Ausgestaltung der Erfindung ist die Anbauvorrichtung in Form eines frontseitig und/oder heckseitig angeordneten Dreipunkt-Krafthebers und/oder einer Anhängevorrichtung ausgebildet. Frontseitig und/oder heckseitig angeordnete Dreipunkt-Kraftheber und/oder Anhängevorrichtungen sind standardisierte und im Wesentlichen an jedem landwirtschaftlichen Fahrzeug vorhandene Anbauvorrichtungen. Durch die Nutzung standardisierter Anbauvorrichtungen kann das Energiespeichermodul besonders einfach nachgerüstet und/oder an einem landwirtschaftlichen Fahrzeug befestigt werden, da im Wesentlichen jedes landwirtschaftliche Fahrzeug zumindest eine standardisierte Anbauvorrichtung aufweist. Ein weiterer Vorteil ist, dass das Energiesparmodul dadurch zwischen mehreren landwirtschaftlichen Fahrzeugen austauschbar nutzbar ist.

Erfindungsgemäß ist der Energiespeicher in Form mindestens eines mit einem elektrischen Antriebsmodul verbundenen Schwungrades ausgebildet. Durch die Nutzung eines Schwungrades kann die über das Bordnetz zugeführte, insbesondere durch Rekuperation gewonnene, elektrische Energie mechanisch, insbesondere in Form von Rotationsenergie und Massenträgheit, in dem Schwungrad gespeichert werden. Vorteilhaft ist dabei, dass ein Schwungrad eine höhere Energiedichte als beispielsweise Batterien aufweist, wodurch bei vergleichbarem Bauraum eine höhere Energie gespeichert werden kann. Zudem ist weist das Schwungrad einen sehr guten Wirkungsgrad als Kurzzeitspeicher auf, welcher auch kurzfristig hohe Energiemengen abgeben kann. Besonders vorteilhaft ist, dass das üblicherweise als nachteilig angesehene erhöhte Gewicht eines Schwungrades vorteilhafterweise zur Ballastierung des landwirtschaftlichen Fahrzeuges genutzt werden kann.

In einer bevorzugten Ausgestaltung der Erfindung weist das Energiespeichermodul eine Steuereinheit zum Steuern und Regeln des Energiespeichermoduls auf, welches mit einer Steuer- und Regelvorrichtung des landwirtschaftlichen Fahrzeuges verbindbar ist. Dies hat den Vorteil, dass ein Speichern und Abrufen elektrischer Energie durch das Energiespeichermodul auf den gesamten, insbesondere elektrischen, Energiebedarf des landwirtschaftlichen Fahrzeuges abgestimmt und durch die Steuer- und Regelvorrichtung des landwirtschaftlichen Fahrzeuges geregelt werden kann.

Ferner ist bevorzugt vorgesehen, dass das Energiespeichermodul einen Wechselrichter aufweist. Der Wechselrichter bietet den Vorteil, dass die von dem Energiespeichermodul abgerufenen elektrische Leistung in Form von Wechselstrom bereitgestellt werden kann, wobei der Wechselrichter je nach Schaltung einphasigen oder dreiphasigen Wechselstrom bereitstellen kann. Dies hat den Vorteil, dass ein elektrischer Wechselstromverbraucher, der an dem landwirtschaftlichen Fahrzeug angeordnet oder mit diesem verbunden ist, unmittelbar durch das Energiespeichermodul verbunden werden kann und ein Wechselrichten durch das landwirtschaftliche Fahrzeug entfallen kann.

Vorteilhafterweise ist das Energiespeichermodul zur Abgabe elektrischer Energie lösbar mit einem zumindest teilweise elektrisch betreibbaren Kühlsystem des landwirtschaftlichen Fahrzeuges verbindbar. Dies hat den Vorteil, dass beispielsweise bei einem abgeschalteten Antriebsmotor die elektrische Energie für ein Nachlaufen des zumindest teilweise elektrisch betreibbaren Kühlsystems, insbesondere eines Lüfters und/oder einer Kühlmittelpumpe, direkt durch das Energiespeichermodul bereitgestellt werden kann.

In einer bevorzugten Ausgestaltung der Erfindung ist das Energiespeichermodul in ein Ballastgewicht zur Ballastierung des landwirtschaftlichen Fahrzeuges integriert. Das Energiespeichermodul kann dabei im Wesentlichen vollständig innerhalb eines Ballastgewichtes angeordnet sein, welches an einer Anbauvorrichtung des landwirtschaftlichen Fahrzeuges befestigbar ist. Eine Integration des Energiespeichermodules in ein Ballastgewicht bietet den Vorteil, dass zum einen das Gewicht zur Ballastierung des landwirtschaftlichen Fahrzeuges weiter erhöht werden kann. Zum anderen kann das Energiespeichermodul besonders gut gegen äußere Einflüsse geschützt werden, welche das Energiespeichermodul beschädigen könnten. Zudem bietet das Ballastgewicht die Möglichkeit der Konstruktion einer robusten Auslegung des Energiespeichermoduls, da im Wesentlichen keine Gewichtsbeschränkung berücksichtigt werden muss. Zudem kann die bewährte Auslegung und Gestaltung von Ballastelementen zur Befestigung an einer Anbauvorrichtung des landwirtschaftlichen Fahrzeuges genutzt werden. In einer besonders bevorzugten Ausgestaltung der Erfindung weist das Energiespeichermodul mindestens ein lösbar mit dem Energiespeichermodul verbundenes Ballastelement auf. Das Ballastelement kann außenseitig lösbar an dem Energiesparelement und/oder dem in einem Ballastgewicht integriertem Energiespeichermodul befestigt werden. Dies hat den Vorteil, dass die Ballastierung an den tatsächlichen Gewichtsbedarf des landwirtschaftlichen Fahrzeuges durch Anbringung eines entsprechenden Ballastelementes angepasst werden kann.

Die Erfindung betrifft ferner ein landwirtschaftliches Fahrzeug mit mindestens einem wie oben beschriebenen und ausgestalteten Energiespeichermodul. Das landwirtschaftliche Fahrzeug kann dabei einen zumindest teilweise elektrisch betreibbaren Antriebsstrang aufweisen.

Nachfolgend wird die Erfindung unter Bezugnahme auf die anliegende Zeichnung näher erläutert.

Es zeigt:

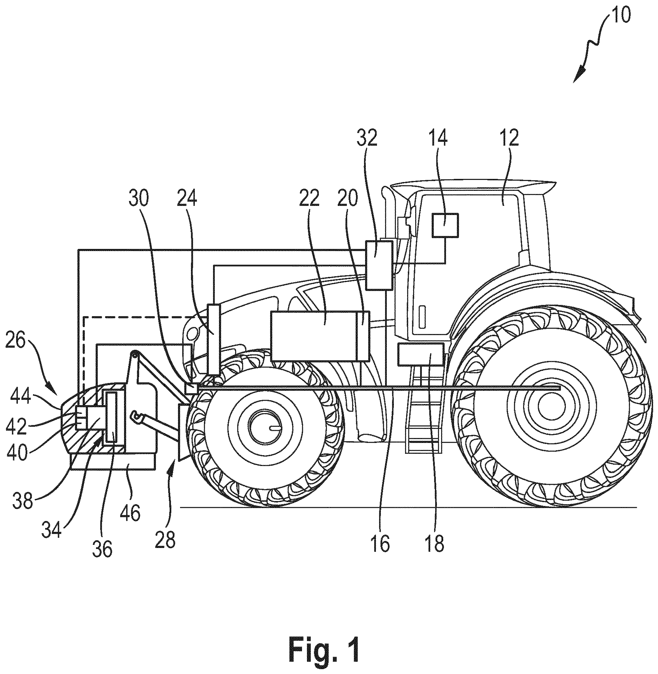

- Fig. 1:: eine schematische Seitenansicht eines landwirtschaftlichen Fahrzeuges mit einem erfindungsgemäßen Energiespeichermodul.

In Figur 1 ist ein landwirtschaftliches Fahrzeug 10 in Form eines Traktors schematisch von der Seite dargestellt, wobei der grundsätzliche Aufbau eines Traktors als dem Fachmann bekannt angesehen wird. Ein landwirtschaftliches Fahrzeug 10 im Sinne der Erfindung kann jedes zur landwirtschaftlichen Arbeit einsetzbare Fahrzeug sein, beispielsweise ein Traktor, ein Frontlader, eine Baumaschine, oder eine Erntemaschine wie ein Mähdrescher oder Feldhäcksler. Der Traktor weist zur Aufnahme eines Bedieners eine geschlossene Fahrerkabine 12 auf, wobei innerhalb der Fahrerkabine 12 üblicherweise Anzeige- und Bedienelemente 14 zur Bedienung des landwirtschaftlichen Fahrzeuges 10 angeordnet sind. Das landwirtschaftliche Fahrzeug 10 kann eine Vielzahl von elektrische Verbraucher aufweisen, die über wie Sensoren und Aktoren über ein elektrisches Bordnetz 16 mit Energie versorgt werden und über dieses gesteuert und geregelt werden können. Das Bordnetz 16 weist eine Batterie 18 zum Speichern elektrischer Energie auf, die beispielsweise einem in Form eines Startergenerators ausgebildeten elektrischen Antriebselement 20 zur Verfügung gestellt werden kann, um einen mit dem elektrischen Antriebselement 20 gekoppelten Verbrennungsmotor 22 zu starten. Bei laufenden Verbrennungsmotor 22 kann mittels des elektrischen Antriebselementes 20, insbesondere in Form eines Startergenerators, elektrische Energie zur Einspeisung in das Bordnetz 16 und insbesondere Speicherung in der Batterie 18 generiert werden. Das landwirtschaftliche Fahrzeug 10 kann einen zumindest teilweise oder vollständig elektrifizierten Antrieb und/oder ein zumindest teilweise elektrisch betreibbares Kühlsystem 24, insbesondere zur Kühlung des Verbrennungsmotors 22, aufweisen. Unter einem elektrischen Antriebselement 20 ist im Sinne der Erfindung ein elektrischer Starter, eine Lichtmaschine, ein Startergenerator und/oder eine Elektromotor zum Antrieb des Fahrzeuges, beispielsweise auch in Form eines Radnabenmotors, zu verstehen. Mittels eines elektrischen Antriebselementes 20 in Form eines Startergenerators kann beispielsweise bei einem Verzögern des landwirtschaftlichen Fahrzeugs 10 durch das als Generator wirkende elektrische Antriebselement 20 ein Teil der kinetischen Energie des landwirtschaftlichen Fahrzeuges 10 in elektrische Energie umgewandelt und in das Bordnetz 16 zurückgespeist werden. Die Umwandlung kinetischer Energie eines Fahrzeuges in speicherbare elektrische Energie ist aus der Fahrzeugtechnik als Rekuperation bekannt. Das spätere Abrufen der so generierten elektrischen Energie ermöglicht je nach Fahrsituation eine Entlastung und/oder Unterstützung des Verbrennungsmotors 22, wodurch beispielsweise der Kraftstoffverbrauch des landwirtschaftlichen Fahrzeuges 10 gesenkt werden kann.

Erfindungsgemäß ist zur Speicherung, und insbesondere zur Vergrößerung der elektrischen Speicherkapazität des landwirtschaftlichen Fahrzeuges 10, ein Energiespeichermodul 26 vorgesehen, welches außenseitig an einer Anbauvorrichtung 28 des landwirtschaftlichen Fahrzeuges 10 angeordnet ist, wobei die Anbauvorrichtung 28 zum Befestigen eines Anbaugerätes und/oder eines Anhängers an dem landwirtschaftlichen Fahrzeug 10 ausgestaltet ist. Das Energiespeichermodul 26 ist in Fig.1 in einer teilweise geschnittenen Darstellung gezeigt, wobei der von dem landwirtschaftlichen Fahrzeug 10 abgewandte Bereich als Schnittzeichnung dargestellt ist. Die Anbauvorrichtung 28 ist in Form eines frontseitig an dem landwirtschaftlichen Fahrzeug 10 angeordneten Dreipunkt-Kraftheber ausgebildet. Eine Anbauvorrichtung 28 zur Aufnahme eines Energiespeichermoduls 26 kann frontseitig und/oder heckseitig an dem landwirtschaftlichen Fahrzeug 10 angeordnet sein und beispielsweise in Form eines Dreipunkt-Krafthebers, eines Frontkrafthebers und/oder einer in der Landwirtschaft gebräuchlichen Anhängevorrichtung ausgebildet sein.

Das Energiespeichermodul 26 ist zum Austausch elektrischer Energie elektrisch leitend über eine lösbare Steckverbindung 30 mit dem Bordnetz 16 des landwirtschaftlichen Fahrzeuges 10 verbunden. Das Energiespeichermodul 26 ist weiterhin mit einer Steuer- und Regelvorrichtung 32 des landwirtschaftlichen Fahrzeugs 10 verbunden, wodurch die Steuerung und Regelung des Energiespeichermoduls 26, insbesondere die Speicherung und Abgabe elektrischer Energie, in die Steuerung des landwirtschaftlichen Fahrzeuges 10 integriert werden kann. Zudem ist das Energiespeichermodul 26 direkt mit dem Kühlsystem 24 des landwirtschaftlichen Fahrzeuges 10 verbunden, so dass auch bei abgeschaltetem Verbrennungsmotor 22 eine ausreichende Kühlung, beispielsweise des Verbrennungsmotors 22 und/oder des Energiespeichermoduls 26, gewährleistet werden kann. Dies kann beispielsweise durch einen elektrisch betreibbaren Kühlerlüfter und/oder eine elektrisch betreibbare Kühlmittelpumpe erfolgen. Die elektrische Verbindung mit der Steuer- und Regelvorrichtung 32 und/oder dem Kühlsystem 24 kann ebenfalls mittels der lösbaren Steckverbindung 30 erfolgen, wobei in Fig. 1 zur besseren Übersichtlichkeit die Verbindungen zwischen dem Energiespeichermodul, dem Bordnetz 16, der Steuer- und Regelvorrichtung 32 sowie dem Kühlsystem 24 getrennt und lediglich schematisch dargestellt sind.

Zur Speicherung der elektrischen Energie weist das Energiespeichermodul 26 einen mechanischen Energiespeicher 34 in Form eines Schwungrades 36 auf. Das Schwungrad 36 ist dabei mit einem elektrischen Antriebsmodul 38 verbunden, welches sowohl als Antrieb zum Beschleunigen des Schwungrades 36 beim Speichern elektrischer Energie, als auch als Generator zur Generierung elektrischer Energie beim Abrufen elektrischer Energie betreibbar ist. Zur Steuerung und Regelung des Energiespeichermoduls 26 und insbesondere des elektrischen Antriebsmoduls 38 weist das Energiespeichermodul 26 eine Steuereinheit 40 auf, welche mit der Steuer- und Regelvorrichtung 32 zusammenwirken kann. Zur Bereitstellung elektrischer Energie mittels eines Wechselstromes weist das Energiespeichermodul 26 einen Wechselrichter 42 auf, welcher je nach Schaltung einphasigen oder dreiphasigen Wechselstrom, sogenannten Drehstrom, bereitstellen kann. Der Wechselstrom kann dabei direkt einem entsprechenden Verbraucher, beispielsweise dem Kühlsystem 24 und/oder einem Anbaugerät des landwirtschaftlichen Fahrzeuges 10, mittels einer entsprechenden elektrischen Verbindung zur Verfügung gestellt und insbesondere mittels der Steuereinheit 40 geregelt werden.

Das Energiespeichermodul 26 ist im Wesentlichen vollständig innerhalb eines Ballastgewichtes 44 integriert, wobei das Energiespeichermodul 26 und das Ballastgewicht 44 eine äußere Gestalt zur, insbesondere kraft- und/oder formschlüssigen, Aufnahme an der Anbauvorrichtung 28 des landwirtschaftlichen Fahrzeuges 10 aufweisen. An dem Energiespeichermodul 26 ist außenseitig, insbesondere bodenseitig, ein zusätzliches Ballastelement 46 angeordnet, durch welches je nach benötigter Ballastierung des landwirtschaftlichen Fahrzeuges 10 das Gewicht des Energiespeichermodul 26 und/oder des Ballastgewichtes 42 erhöht werden kann.

### Bezugszeichenliste

- 10: landwirtschaftliches Fahrzeug
- 12: Fahrerkabine
- 14: Anzeige- und Bedienelement
- 16: Bordnetz
- 18: Batterie
- 20: elektrische Antriebseinheit
- 22: Verbrennungsmotor
- 24: Kühlsystem
- 26: Energiespeichermodul
- 28: Anbauvorrichtung
- 30: Steckverbindung
- 32: Steuer- und Regelvorrichtung
- 34: Energiespeicher
- 36: Schwungrad
- 38: Antriebsmodul
- 40: Steuereinheit
- 42: Wechselrichter
- 44: Ballastgewicht
- 46: Ballastelement

## Patentansprüche

1. Energiespeichermodul mit einem Energiespeicher (34) zum abrufbaren Speichern elektrischer Energie für ein landwirtschaftliches Fahrzeug (10) mit einem elektrischen Bordnetz (16), mindestens einem elektrischen Antriebselement (20) und mindestens einer außenseitigen Anbauvorrichtung (28), wobei das Energiespeichermodul (26) derart ausgebildet und ausgestaltet ist, dass es lösbar mit einer, insbesondere frontseitig und/oder heckseitig angeordneten, Anbauvorrichtung (28) des landwirtschaftlichen Fahrzeuges (10) und dessen Bordnetz (16) zur Übertragung elektrischer Energie verbindbar ist, **dadurch gekennzeichnet, dass** der Energiespeicher (34) in Form mindestens eines mit einem elektrischen Antriebsmodul (38) verbundenen Schwungrades (36) ausgebildet ist.

2. Energiespeichermodul nach Anspruch 1, **dadurch gekennzeichnet, dass** die Anbauvorrichtung (28) in Form eines frontseitig und/oder heckseitig angeordneten Dreipunkt-Krafthebers und/oder einer Anhängevorrichtung ausgebildet ist.

3. Energiespeichermodul nach Anspruch 1 oder 2, **dadurch gekennzeichnet, dass** das Energiespeichermodul (26) eine Steuereinheit (40) zum Steuern und Regeln des Energiespeichermoduls (26) aufweist, welches mit einem Steuer- und Regelvorrichtung (32) des landwirtschaftlichen Fahrzeuges verbindbar ist.

4. Energiespeichermodul nach einem der vorherigen Ansprüche, **dadurch gekennzeichnet, dass** das Energiespeichermodul (26) einen Wechselrichter (42) aufweist.

5. Energiespeichermodul nach einem der vorherigen Ansprüche, **dadurch gekennzeichnet, dass** das Energiespeichermodul (26) zur Abgabe elektrischer Energie lösbar mit einem zumindest teilweise elektrisch betreibbaren Kühlsystem (24) des landwirtschaftlichen Fahrzeuges (10) verbindbar ist.

6. Energiespeichermodul nach einem der vorherigen Ansprüche, **dadurch gekennzeichnet, dass** das Energiespeichermodul (26) in ein Ballastgewicht (44) zur Ballastierung des landwirtschaftlichen Fahrzeuges (10) integriert ist.

7. Energiespeichermodul nach einem der vorherigen Ansprüche, **dadurch gekennzeichnet, dass** das Energiespeichermodul (26) mindestens ein lösbar mit dem Energiespeichermodul (26) verbundenes Ballastelement (46) aufweist.

8. Landwirtschaftliches Fahrzeug mit einem Energiespeichermodul (26) nach einem der vorherigen Ansprüche.

## Claims

1. An energy storage module comprising an energy storage means (34) for the retrievable storage of electrical energy for an agricultural vehicle (10) having an electrical on-board system (16), at least one electrical drive element (20) and at least one external attachment device (28), wherein the energy storage module (26) is of such a design and configuration that it can be releasably connected to an attachment device (28), arranged in particular at the front and/or rear, of the agricultural vehicle (10) and the on-board system (16) thereof for the transmission of electrical energy, **characterised in that** the energy storage means (34) is in the form of at least one flywheel (36) connected to an electrical drive module (38).

2. An energy storage module according to claim 1 **characterised in that** the attachment device (28) is in the form of a front and/or rear three-point power lift and/or a suspension device.

3. An energy storage module according to claim 1 or claim 2 **characterised in that** the energy storage module (26) has a control unit (40) for open-loop and closed-loop control of the energy storage module (26), which can be connected to an open-loop and closed-loop control device (32) of the agricultural vehicle.

4. An energy storage module according to one of the preceding claims **characterised in that** the energy storage module (26) has an inverter (42).

5. An energy storage module according to one of the preceding claims **characterised in that** for delivering electrical energy the energy storage module (26) can be releasably connected to an at least partially electrically drivable cooling system (24) of the agricultural vehicle (10).

6. An energy storage module according to one of the preceding claims **characterised in that** the energy storage module (26) is integrated into a ballast weight (44) for ballasting the agricultural vehicle (10).

7. An energy storage module according to one of the preceding claims **characterised in that** the energy storage module (26) has at least one ballast element (46) releasably connected to the energy storage module (26).

8. An agricultural vehicle comprising an energy storage module (26) according to one of the preceding claims.

## Revendications

1. Module de stockage d'énergie comprenant un accumulateur d'énergie (34) pour stocker de manière disponible de l'énergie électrique pour un véhicule agricole (10) comportant un réseau de bord électrique (16), au moins un élément d'entraînement électrique (20) et au moins un dispositif porté extérieur (28), le module de stockage d'énergie (26) étant conçu et configuré de façon à pouvoir être relié de manière détachable à un dispositif porté (28) du véhicule agricole (10), disposé en particulier à l'avant et/ou à l'arrière, et à son réseau de bord (16) pour la transmission d'énergie électrique, **caractérisé en ce que** l'accumulateur d'énergie (34) est réalisé sous la forme d'au moins un volant d'inertie (36) relié à un module d'entraînement électrique (38).

2. Module de stockage d'énergie selon la revendication 1, **caractérisé en ce que** le dispositif porté (28) est réalisé sous la forme d'un relevage trois points disposé à l'avant et/ou à l'arrière et/ou d'un dispositif d'attelage.

3. Module de stockage d'énergie selon l'une des revendications 1 ou 2, **caractérisé en ce que** le module de stockage d'énergie (26) présente une unité de commande (40) pour commander et réguler le module de stockage d'énergie (26), laquelle peut être reliée à un dispositif de commande et de régulation (32) du véhicule agricole.

4. Module de stockage d'énergie selon l'une des revendications précédentes, **caractérisé en ce que** le module de stockage d'énergie (26) présente un onduleur (42).

5. Module de stockage d'énergie selon l'une des revendications précédentes, **caractérisé en ce que**, pour fournir de l'énergie électrique, le module de stockage d'énergie (26) peut être relié de manière détachable à un système de refroidissement (24) pouvant fonctionner au moins partiellement électriquement du véhicule agricole (10).

6. Module de stockage d'énergie selon l'une des revendications précédentes, **caractérisé en ce que** le module de stockage d'énergie (26) est intégré dans un poids de lest (44) pour lester le véhicule agricole (10).

7. Module de stockage d'énergie selon l'une des revendications précédentes, **caractérisé en ce que** le module de stockage d'énergie (26) présente au moins un élément de lest (46) relié de manière détachable au module de stockage d'énergie (26).

8. Véhicule agricole équipé d'un module de stockage d'énergie (26) selon l'une des revendications précédentes.
